# EUROPEAN PATENT SPECIFICATION

(11) **EP 0 403 787 B1**
(45) Date of publication and mention of the grant of the patent: **15.03.1995**
(21) Application number: 90109100.9
(22) Date of filing: 15.05.1990
(51) Int. Cl.: F16H 59/04, F16H 61/34

(54) **Mechanical transmission shifting mechanism**
Schalteinrichtung für ein mechanisches Getriebe
Mécanisme de changement de vitesse pour une transmission mécanique

(30) Priority: 21.06.1989 US 369488
(43) Date of publication of application: 27.12.1990
(73) Proprietor: EATON CORPORATION, Cleveland, Ohio 44114 (US)
(72) Inventor: Peterson, Paul Roland, Scotts, MI 49088 (US); Bailey, Robert Jay, Portage, MI 49002 (US); Waling, Lloyd Alan, Kalamazoo, MI 48004 (US)
(74) Representative: Rüger, Rudolf, Dr.-Ing.

(56) References cited:
- GB-A- 2 109 486
- US-A- 2 137 939
- US-A- 2 137 953
- US-A- 2 157 592
- US-A- 2 931 237

## Description

### INTRODUCTION

This invention relates generally to a fluid operated (X-Y) shifting mechanism for shifting gears or clutches of a mechanical change gear transmission by pivoting a shift finger in a first (X-X) direction and moving the shift finger in a second axial (Y-Y) direction that is substantially transverse to the (X-X) direction and more particularly to an improved fluid operated (X-Y) shifting mechanism that is provided with reduced rotational inertia when the shift finger is pivoted in the (X-X) direction.

### BACKGROUND OF THE INVENTION

A variety of (X-Y) type shifting mechanisms for shifting gears or clutches of a mechanical change gear transmission are known in the art. Such mechanical change gear transmissions characteristically feature a plurality of substantially parallel shift rails that are selectively engageable by pivoting a shift finger in a first (X-X) direction that is substantially transverse to the direction of their substantial parallel alignment and then moving the selected shift rail to effect the gear shift desired by moving the shift finger in a second direction (Y-Y) that is substantially transverse to the (X-X) direction and substantially parallel to the alignment direction of the shift rails.

An early example of a mechanical transmission fluid operated (X-Y) shifting mechanism is disclosed in United States Patent 2,137,939. In this mechanism, the shift finger is pivoted by a selector device to selectively engage one of shift bars. The shift finger is secured to a piston rod for rotation therewith. At both endes the piston rod is connected to first and second piston heads. Due to this arrangement the enlarged four piston heads are all caused to rotate when the shift finger is pivoted by the selector device resulting in a substantial amount of rotational inertia and friction to be overcome in pivoting shift finger, particularly during cold weather operation when fluid seals and the like are in a hardened condition and the fluid itself is more viscous.

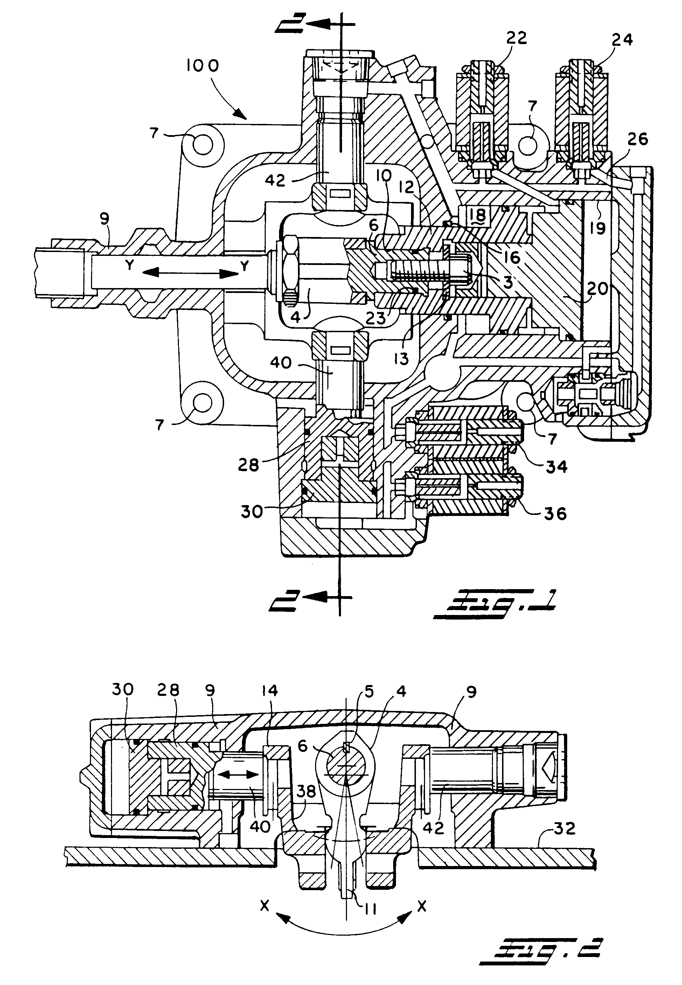

Another example of a mechanical transmission fluid operated (X-Y) shifting mechanism is disclosed in United States Patent 2,931,237 from which the features defined in the first part of claim 1 are known. Here however, as shown in Figure 3, the shift rod actuator is fixedly secured to a shaft which is received through and fixedly secured to a piston so that the piston is able to move the shaft axially but is also rotated in unison therewith when the shaft is rotated by the actuator requiring the seals in the outer surface of the piston to rotate relative the large diameter bore surface and thereby creating high rotational inertia and friction to be overcome during shifting particularly during cold weather operating conditions. The mechanism described in United States Patent 2,931,237 was known in the art as the "Fuelaire" system in which the piston was press fitted onto the shaft without seal.

### SUMMARY OF THE INVENTION

Accordingly, it is an object of this invention to provide an (X-Y) shifting mechanism for shifting change gears of a mechanical transmission that advantageously lessens rotational inertia and friction encountered during the shifting operation.

It is another object of this invention to provide an (X-Y) shifting mechanism for a mechanical change gear transmission having an advantageous decrease in rotational inertia and friction encountered during the shifting operation particularly when shifting under cold temperature operating conditions.

### BRIEF DESCRIPTION OF THE DRAWINGS

FIGURE 1 is a central cross-sectional plan view of a preferred embodiment of an (X-Y) shifting mechanism 100 of the invention; and
FIGURE 2 is a cross-sectional view taken along view line 2-2 of mechanism 100 of FIGURE 1.

### DESCRIPTION OF SOME PREFERRED EMBODIMENTS

Shifting mechanism 100 of FIGURE 1 is a fluid operated (X-Y) shifting mechanism adapted to be mounted by means of bolts 7 or the like to a mechanical change gear transmission having a housing generally referenced by numeral 32 in FIGURE 2.

Mechanism 100 has a shift finger 4 fixedly secured to a shaft member 6 by means such as key 5. Shaft 6 is threadingly secured to bolt 3 having a washer 13 which are rotatable relative to fluid operated piston 12 hereinafter described and enable shaft member 6 to rotate in response to pivotal movement of shift finger 4 in the (X-X) direction shown in FIGURE 2.

As shown in FIGURE 1, mechanism 100 has a housing generally referenced by numeral 9 in which shaft member 6 is reciprocally movable in a manner enabling it to move axially in a (Y-Y) direction that is substantially transverse to the (X-X) direction.

Generally, pivoting of shift finger 4 in the (X-X) direction into pre-selected positions aligns end 11 with a particular shift rail (not shown) desired and axial movement of shaft member 6 in the (Y-Y) direction selected then causes end 11 to move the rail axially in the (Y-Y) direction desired to effect the gear shift.

Shaft member 6 is moved in the (Y-Y) direction by at least one second fluid operated piston 12 that is received in bore 18 within housing 9. An end of shaft member 6 is supported in an open-ended bore 10 in an end of piston 12 facing towards shaft 6 and shift finger 4.

Opposite axial movement of piston 12 within bore 18 is operative to move shaft member 6 and shift finger 4 in the (Y-Y) direction in addition to shaft member 6 being rotatable within bore 10 relative to piston 12.

Preferably two second fluid-operated pistons are employed to move shaft member 6 and shift finger 4 in the (Y-Y) direction with one being previously described piston 12 and the other being piston 20 shown in FIGURE 1 that is reciprocally movable within bore 19 and adopted to cooperate with piston 12 in moving shaft 6 and shift finger 4 to a pre-selected position in the (Y-Y) direction according to pre-selected signals provided by solenoids 22 and 24 for controlling fluid flow through passageways generally referenced by numeral 26 as is well known to those skilled in the art of fluid-operated transmissions.

As shown in FIGURE 2, shift finger 4 is pivoted about the central rotational axis of shaft member 6 by axial movement of shafts 40 and 42 in the (X-X) direction as shown by the horizontal arrows.

A yoke 38 has opposite legs secured respectively to shafts 40 and 42 and is adapted to engage opposite sides of shift finger 4 a displaced distance from the center line of shafts 40 and 42 which causes shift finger 4 to pivot in the (X-X) direction as shown by the curved arrows.

Shaft 40 is moved in the (X-X) direction by at least one first fluid-operated piston 28 and preferably by two first fluid operated pistons with one being piston 28 that is operatively connected to shaft 40 and the other being piston 30 with both being disposed within respective bores (not referenced) and operative to cooperate with each other in moving shift finger 4 to a pre-selected position in the (X-X) direction according to pre-selected signals provided by solenoids 34 and 36 for controlling fluid flow through selected fluid passageways within housing 9 as is well known to those skilled in the art.

Shaft member 6 within bore 10 and the fluid-operated pistons hereinbefore described preferably include at least one fluid sealing member between their respective outer surfaces and the surrounding surface of housing 9 defining the particular bore in which they are received such as fluid sealing members 16 and 23 shown in FIGURE 1 which are respectively preferably in the form of an elastomeric ring preferably disposed in and extending from an annular groove (not referenced) encircling the pistons and also shaft 6.

It can readily be seen that with shaft member 6 now able to rotate within bore 10 of piston 12 when shift finger 4 is pivoted in the (X-X) direction, piston 12 (having the larger diameter) is no longer required to rotate, enabling a lessening of rotational inertia to be overcome during the shifting operation particularly in cold weather when both operating fluid viscosity and the hardness of fluid seals increases.

## Claims

1. A shifting mechanism (100) for shifting change gears of a mechanical change gear transmission of the type having a plurality of shift rails selectively engageable by pivotal movement of a shift finger (4) which is fixedly secured to a shaft member (6), whereby said shift finger (4) is arranged to be pivoted in a first (X-X) direction by at least one first fluid-operated piston (28,30) operatively connected thereto to select a gear shift, and wherein said shift finger (4) is moved in a second axial (Y-Y) direction substantially transverse to the (X-X) direction by at least one second fluid-operated piston (12,20) comprising an open-ended bore (10) into which said shaft member is inserted to be operatively connected to the shaft member (6) and the at least one second piston (12,20) to effect the gear shift selected,
characterized in that:
an end of said shaft member (6) is supported in said open-ended bore (10) of said at least one second fluid-operated piston (12,20), and in that said connection of said shaft member (6) and said open-ended bore (10) being adapted to enable the shaft member (6) to rotate relative to said second piston (12,20) and thereby lessen rotational inertia and friction encountered in pivoting the shift finger (4) in the (X-X) direction while enabling said second piston (12,20) to move the shift finger (4) in the (Y-Y) direction.

2. The mechanism of claim 1 including at least one fluid sealing member (23) disposed between the shaft member (6) and the piston surface surrounding the open-ended bore (10) in which the shaft member (6) is supported.

3. The mechanism of claim 2 wherein the sealing member (23) is an elasteromeric ring.

4. The mechanism of claim 1 having two first fluid-operated pistons (28,30) operative to cooperate with each other and pivot the shift finger (4) in the (X-X) direction according to pre-selected conditions.

5. The mechanism of claim 1 having two second fluid-operated pistons (12,20) operative to cooperate with each other and move the shift finger (4) axially in the (Y-Y) direction with one of said pistons (12) having the open-ended bore (10) therein in which the shaft member (6) is supported.

6. A mechanical change gear transmission having the shifting mechanism of claim 4.

7. A mechanical change gear transmission having the shifting mechanism of claim 1.

## Patentansprüche

1. Schalteinrichtung (100) zum Schalten von Gängen in einem mechanischen Geschwindigkeitswechselgetriebe der Bauart mit einer Anzahl von Schaltstangen, die durch eine Schwenkbewegung eines starr an einer Welle (6) befestigten Schaltfingers wahlweise mit diesem in Eingrigff bringbar sind, wobei der Schaltfinger (4) dazu vorgesehen ist, durch wenigstens einen ersten betriebsmäßig mit ihm verbundenen und fluidbetätigten Kolben (28, 30) in einer ersten (X-X) Richtung geschwenkt zu werden, um eine Schaltgasse auszuwählen, und wobei der Schaltfinger (4) in einer zweiten axialen (Y-Y) Richtung, die im wesentlichen quer zu der (X-X) Richtung liegt, durch wenigstens einen zweiten fluidbetätigten Kolben (12, 20) zu bewegen ist, der eine Durchgangsbohrung (10) enthält, in die die Welle (6) zur antriebsmäßigen Verbindung damit eingesetzt ist, und wobei der wenigstens eine zweite Kolben die ausgewählte Schaltung bewirkt,
dadurch gekennzeichnet, daß
ein Ende der Welle (6) in der Durchgangsbohrung (10) des wenigstens einen zweiten fluidbetätigten Kolbens (12, 20) gelagert ist und daß die Verbindung zwischen der Welle (6) und der Durchgangsbohrung (10) so gestaltet ist, daß die Welle (6) sich gegenüber dem zweiten Kolben (12, 20) drehen kann, wodurch das Trägheitsmoment und die Reibung, die beim Schwenken des Schaltfingers in dar (X-X) Richtung auftritt, vermindert ist, während der zweite Kolben (12, 20) in der Lage ist, den Schaltfinger (4) in der (Y-Y) Richtung zu bewegen.

2. Einrichtung nach Anspruch 1, bei der wenigstens ein fluiddichtendes Teil (23) zwischen der Welle (6) und der Kolbenfläche angeordnet ist, die die Durchgangsbohrung (10) umgibt, in der die Welle (6) gelagert ist.

3. Einrichtung nach Anspruch 2, bei der das Dichtungsteil (23) ein elstomerer Ring ist.

4. Einrichtung nach Anspruch 1, bei der zwei erste fluidbetätigte Kolben (28, 30) vorgesehen sind, die funktionsmäßig zusammenwirken und den Schaltfinger (4) in der (X-X) Richtung entsprechend vorbestimmter Bedingungen bewegen.

5. Einrichtung nach Anspruch 1, bei der zwei zweite fluidbetätigte Kolben (12, 20) vorgesehen sind, die funktionsmäßig miteinander zusammenwirken und den Schaltfinger (4) in der (Y-Y) Richtung axial bewegen, wobei einer der Kolben (12) die Durchgangsbohrung (10) enthält, in der das Wellenteil (6) gelagert ist.

6. Mechanisches Geschwindigkeitswechselgetriebe mit einem Schaltmechanismus nach Anspruch 4.

7. Mechanisches Geschwindigkeitswechselgetriebe mit dem Schaltmechanismus nach Anspruch 1.

## Revendications

1. Mécanisme de changement de vitesse (100) pour changer les vitesses d'une boîte de vitesses mécanique du type comportant une pluralité de coulisseaux de changement de vitesse que l'on peut mettre sélectivement en prise au moyen du mouvement de pivotement d'un doigt de baladeur (4) solidairement fixé à un élément formant arbre (6), ledit doigt de baladeur (4) étant disposé pour être entraîné en pivotement selon une première direction (X-X) par au moins un premier piston (28, 30) manoeuvré par un fluide, qui lui est fonctionnellement relié, pour sélectionner une vitesse et dans lequel ledit doigt de baladeur (4) se déplace selon une seconde direction axiale (Y-Y), substantiellement transversale par rapport à la direction (X-X), sous l'action d'au moins un second piston (12, 20), manoeuvré par un fluide, comportant un alésage (10) à extrémité ouverte dans lequel ledit élément formant arbre est inséré pour être fonctionnellement relié à l'élément formant arbre (6) et au second piston (12, 20), dont il y a au moins un, pour procéder au changement de vitesse sélectionné,
caractérisé
par le fait qu'une extrémité dudit élément formant arbre (6) est supportée dans ledit alésage (10) à extrémité ouverte dudit second piston (12, 20), manoeuvré par un fluide et dont il y a au moins un,S et que ladite liaison entre ledit élément formant arbre (6) et ledit alésage (10) d'extrémité ouverte est conçue pour permettre à l'élément formant arbre (6) d'être entraîné en rotation par rapport audit second piston (12, 20) et réduire ainsi inertie de rotation et frottement rencontrés lors du pivotement du doigt de baladeur (4) selon la direction (X-X) tout en permettant audit second piston (12, 20) de déplacer l'arbre de baladeur (4) selon la direction (Y-Y).

2. Mécanisme de la revendication 1, comportant au moins un élément (23) d'étanchéité au fluide disposé entre l'élément formant arbre (6) et la surface du piston environnant l'alésage (10) à extrémité ouverte dans lequel l'élément formant arbre (6) est supporté.

3. Mécanisme de la revendication 2, dans lequel l'élément d'étanchéité (23) est un anneau élastomère.

4. Mécanisme de la revendication 1, présentant deux premiers pistons (28, 30), manoeuvrés par un fluide, intervenant pour coopérer l'un avec l'autre et faire pivoter le doigt de baladeur (4) selon la direction (X-X) en fonction de conditions présélectionnées.

5. Mécanisme de la revendication 1, présentant deux seconds pistons (12, 20) manoeuvrés par un fluide, intervenant pour coopérer l'un avec l'autre et déplacer le doigt de baladeur (4) axialement selon la direction (Y-Y), l'un desdits pistons (12) présentant, en lui, l'alésage (10) à extrémité ouverte dans lequel l'élément formant arbre (6) est supporté.

6. Boîte de vitesses mécanique présentant le mécanisme de changement de vitesse de la revendication 4.

7. Boîte de vitesses mécanique présentant le mécanisme de changement de vitesse de la revendication 1.
